(19)

Europäisches
Patentamt
European
Patent Office
Office européen
des brevets

(11) **EP 2 750 447 A1**

(12) **EUROPEAN PATENT APPLICATION**

(43) Date of publication:
**02.07.2014 Bulletin 2014/27**

(21) Application number: **12306699.5**

(22) Date of filing: **28.12.2012**

(51) Int Cl.:
*H04W 36/26* (2009.01)   *H04L 29/08* (2006.01)
*H04W 36/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Sayadi, Bessem
91620 NOZAY (FR)**

• **Melia, Telemaco
91620 NOZAY (FR)**
• **Randriamasy, Sabine
91620 NOZAY (FR)**

(74) Representative: **El Manouni, Josiane
Alcatel-Lucent International
32, avenue Kléber
92700 Colombes (FR)**

(54) **Neighboring cell selection for an user equipment using a content delivery service in a mobile network**

(57)    In an embodiment, there is provided a method for neighboring cell selection for an user equipment using a content delivery service in a mobile network, said content being located at a mobile network node referred to as caching node, said content being delivered through a path between said caching node and said user equipment via a serving cell, said selection of a neighboring cell being based on selection parameters including a delivery delay parameter representative of a delay that would be perceived by said user if said content were delivered through a path between said caching node and said user equipment via said neighboring cell.

FIG.1

EP 2 750 447 A1

**Description**

The present invention generally relates to mobile networks and systems.

Detailed descriptions of mobile networks and systems can be found in the litterature, such as in particular in Technical Specifications published by standardisation bodies such as for example 3GPP (3rd Generation Partnership Project).

In such systems, a mobile terminal (also called User Equipment) has access to various services or applications (such as IP-based services or applications), over a mobile network (such as mobile network providing IP connectivity). Examples of such services or applications include content delivery, such as streaming media (in particular video) content delivery. Examples of mobile networks include LTE (Long Term Evolution) networks. A mobile network generally has a cellular structure and comprises different network nodes including Base Stations associated with different cells. A mobile terminals has access to the network via a cell referred to as serving cell, which may change according to time e.g due to user's mobility.

Cells neighboring a current serving cell (generally cells adjacent or proximate to this serving cell), and which may be candidate to become a new serving cell e.g. as the mobile terminal served by the current serving cell is moving, are generally referred to as neighboring cells. Neigboring cell(s) selection mechanisms or algorithms are generally provided for various purposes, such as:

- selection of neighboring cells to be included in a Neighboring Cell List (NCL), this list usually corresponding to a list of neighboring cells on which the mobile terminal should perform radio measurements, e.g. for handover preparation,
- selection of neighboring cells to be included by the mobile terminal in reports (such as radio measurement reports) sent by the mobile terminal to the network, e.g. for handover target selection by the network,
- selection of a new serving cell (e.g. selection of a target cell for handover), e.g. by the mobile terminal (among cells of the NCL), or by the mobile network (among cells reported by the mobile terminal,
- ...etc.

There is a need to improve the Quality of Experience (QoE) for an user using such content delivery service over such mobile network. In particular, there is a need to improve neighboring cell selection mechanisms, to enable access to such content delivery service at any time via a best serving call in terms of user's QoE. Embodiments of the present invention in particular address such needs.

These and other objects are achieved, in one aspect, by a method for neighboring cell selection for an user equipment using a content delivery service in a mobile network, said content being located at a mobile network node referred to as caching node, said content being delivered through a path between said caching node and said user equipment via a serving cell, said selection of a neighboring cell being based on selection parameters including a delivery delay parameter representative of a delay that would be perceived by said user if said content were delivered through a path between said caching node and said user equipment via said neighboring cell.

These and other objects are achieved, in other aspects, by different entities configured for performing such method. Such entities may include, in particular, user equipment, mobile network node (such as base station), mobile network Topology Aware Information Server TAIS (such as ALTO server).

Some embodiments of apparatus and/or methods in accordance with embodiments of the present invention are now described, by way of example only, and with reference to the accompanying drawings, in which:

- figure 1 is intended to illustrate, in a simplified way, different paths between a caching node wherein content is located, and an user equipment, via different neighboring cells,
- Figure 2 is intended to illustrate an example of membership function of a delivery time parameter for neighboring cell selection, according to an embodiment of the present invention,
- figure 3 is intended to illustrate an example of membership function of a playback fullness parameter for neighboring cell selection, according to an embodiment of the present invention,
- figure 4 is intended to illustrate an example of a three liberty degree for neighboring cell selection, according to an embodiment of the present invention.

Embodiments of the invention may apply to any mobile network topology: small cell, macro cell, ...etc. Embodiments of the invention may advantageously apply to small cell topology.

Data traffic in mobile cellular networks is growing rapidly. Moreover, this growth is expected to continue in the future, and an important part of mobile data traffic is expected to be video. Therefore, there is a need to ensure a high quality of service and data rates of the provided video contents, while guaranteeing the lowest possible costs.

To respond to these growing requirements, small cells networks constitute an interesting alternative to meet the above-mentioned objectives. In fact, small cells stand for cells of small size (generally about 100 or 200 m). The small cells target to deliver high per-user data rates uniformly across the coverage area and provide greater overall throughput via higher spatial reuse. Adding to that, small cells network can be operated and can cover both indoor and outdoor environments.

The small cells networks need backhauling connection, which can be ensured with different types of backhaul depending on the location of the small cell (e.g. Optical Fiber, DSL connexion, power line communication, cooper line). The heterogeneity of the possible used backhaul within a network of small cells impacts the delay of content delivery to the users.

To cope with this backhaul limitation and improve the perceived delay for users, caching content close to the user network edge, e.g. eNodeB for LTE networks, would improve the performance more than caching it in a central location beyond the backhaul. Caching is mainly motivated by reducing peering costs and improving the perceived delay for users. Caching is an attractive solution for fixed networks where a large number of users can be served "in path". Extending these solutions to mobile networks is not straightforward due to users' mobility.

One problem to solve is related to the coupling of caching and mobility between network cells to enable a Mobile Streaming Media Content Delivery Network (MSM-CDN) which can facilitate the access of rich multimedia streams by mobile users on next generation wireless networks. Such problem appears for any network topology: Small cell, Marcor-cell, ...etc. Such problem appears with the growing interest of the research and industry community in the small cells network and caching in the base station.

Embodiments of the invention may apply to various neighboring cell selection mechanisms or algorithms, such as for example above-mentioned neighboring cell selection mechanisms or algorithms. Some embodiments of the invention may advantageously (though not exclusively) apply to neighboring cell selection performed by a mobile terminal.

In an embodiment, in an architecture for content delivery over a mobile network, such as for example an MSM-CDN architecture, it is proposed to take the caching component in the network edge (e.g. ENodeB) into consideration in neighboring cell selection.

In an embodiment, it is proposed to enhance the neighboring cell selection in order to take into account the storage node within a given area.

One of the main issues is how to guarantee service continuity and make an efficient handover to a neighbor cell.

In the current state of art, neighboring cell selection is performed by considering only the radio aspects of the wireless connection. The idea behind is that if the user benefits from a good signal to interference ratio, it is assumed that the user can efficiently decode and receive the service.

But in the current state of the art, neighboring cell selection does not exploit the storage location, or storage location properties. However, when optimizing multimedia delivery, a good reception on the physical channel is a necessary condition but not sufficient. Other parameters should be optimized in order to offer a good Quality of Experience to the user. Examples of such parameters will be given later.

In mobile communications networks, a set of base stations are deployed to connect user terminals to a wireless network. Each user terminal is served by a serving base station (e.g. when it is located within the cell area served by this base station). Nevertheless, due e.g. to mobility or when the base station experiences congestion, the user terminal communication may be handed off to a different base station. A target base station for such handover is generally selected from a Neighbouring Cell List (NCL).

A "neighbour cell" generally stands for a cell which is adjacent or proximate to a serving cell. A neighbour cell list contains different cells which may be declared e.g. by the terminal as eligible for Handover (according to preset criteria such as the minimum received power) and to where handover is possible from the cell owning the list. The terminal should select the cell from the NCL offering it the best possible connectivity to ensure a timely and reliable handover.

For neighboring cell selection, usually the terminal uses the received signal quality (e.g. Eb/N0) to identify candidate cells.

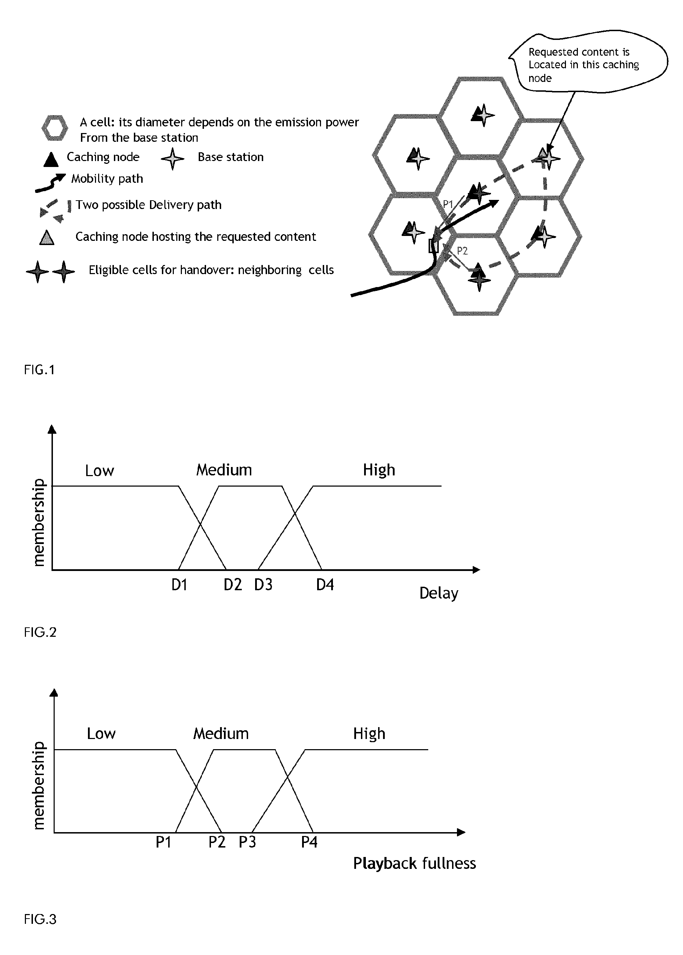

When the content requested by the user is cached in a caching node e.g. base station, the User Equipment UE may receive a satisfying signal quality (Eb/N0> Th_signal_power) from a neighboring cell, and therefore may appropriately identify it as the best candidate to handoff its communication. However, as illustrated for example in figure 1, the UE may receive its requested content through different paths (via different base stations) to this caching node, these different paths experiencing different characteristics (congestion, bandwidth...etc), via different base stations, In this case, it could be better to select another cell providing a comparable signal quality but offering a lower delay to deliver the content.

It is clear that exploiting only the radio interface information is not sufficient to identify a best candidate among a set of base stations offering a different content delivery delay.

For example, the path P2 in Figure 1 could offer a lower delay compared to the path P1 since the delay depends on the backhaul congestion and availability,

In an embodiment, to improve the handover performance and increase the likelihood that the target handover cell can continue to support the user equipment following handover, neighboring cell selection involves different important factors e.g.:

■ The received signal quality,
■ The requirement of its delivery service (fullness of the playback for a video service which is the number of frames/images stored in the buffer of the video player before displaying them), ...etc..
■ The delivery time taken to transmit a video content from the CDN node to the mobile user

In an embodiment, it is proposed that neighboring cell selection considers a three parameters score function denoted here by S to select the best cell where it should be handed off.
In an embodiment, S depends on

- The received signal quality indicator (signal power)
- The provided Quality of service (delay, playback fullness)
- The delivery time of the requested content (it includes the time to retrieve the information from the caching node and the time to travel from the caching node to the user).

The received signal quality indicator may be the most important parameter. For this reason, the score function may be split up into two parts for example as follows:

$$\text{Score} = \text{Received signal quality indicator} \times f \text{ (retrieval and delivery delay from the content location to the UE, playback margin)}$$

The received signal quality indicator function could be considered as perinterval function returning:

0 if the received signal of the target cell is above a Th_signal_power denoting the minimum needed for the received power to be attached to the cell
1 if the received signal of the target cell is below Th_signal_power.

An example of function $f$ (.) will be given later.
The score S may be computed for each cell and a ranking of the neighbour cell list may be realized upon these values.
A neighboring cell selection mechanism should select a cell having the highest score value.
A proposed score function exploits the caching characteristics (delivery delay and the caching node load) and the quality of service required by the user.
For illustration purpose, let's take an example of two users moving from one cell to another: the first one requests a video content which is delivered over the HTTP adaptive streaming protocol and the user's playback contains around 5 s of video; the second user requests another video content using the same protocol and its playback contains around 1 s of video.
Both users have a choice between two neighbouring cells offering them a signal to noise ratio below the Th_signal_power value to continue their communications. But, the two neighboring cells offer different delivery delays for their requested contents.
As the second user has a more critical playback situation, s/he has to be connected to the cell offering him the lowest delivery delay to fill rapidly its playback in a short delay. This is not the case for the first user which has a more comfortably playback margin before any video freeze happens.
Embodiments of the invention enable to have a neighboring cell selection algorithm that provides more equity and is more adapted to the user's traffic. All users don't select the same best cell (in terms of radio aspect). A new degree of freedom is introduced in the algorithm to dispatch spatially the traffic in the network.

■ In an embodiment, a caching node (base station) has a storage or caching facility which is characterized by its load and a delivery delay to a user (that could be computed as the number of hops between the caching node and the user equipment).
■ In an embodiment, possible ways to provide the delivery time information (travelling time + information retrieval time) to the user equipement include use of:

- the common channels (e.g. physical downlink shared channel)
- or the IETF ALTO (Application Layer Traffic Optimization) protocol [http://tools.ietf.org/wg/alto/] , which is designing the ALTO client-server protocol. The ALTO server provides the network operator's view of the network infrastructure, underlying an overlay application, to an ALTO Client embedded in the mobile (user). Through the client-server ALTO exchange, updated information (delivery time, load occupancy) on the available video sources is made available to mobile users.

■ In an embodiment, the handover is initiated by the user equipments.
■ In an embodiment, Implementation of neighboring cell selection may use a fuzzy logic framework, for example as follows.

The membership function of the delay (or delivery time) parameter could be qualified as depicted on Figure 2. This function takes qualitative values in the set {"low, "medium", "high"}, depending on the value of the provided delay and the requested delay.

In Figure 2, by defining some threshold ($D_{1..4}$) the delay could be qualified as Low, Medium or High depending on the requirement of the service.

The membership function of the playback fullness could be qualified as depicted in Figure 3, and take qualitative values as well.

In figure 3, by defining some threshold ($P_{1..4}$), the available playback could be qualified as Low, Medium or High depending on the situation when the handover will be initiated.

In this example, by coupling these two parameters, the user equipment could select the appropriate target cell offering the required quality of service. This way, load balance between the cells will be implicitly ensured. Classically, by exploiting only the radio information, some user equipments will select the best candidate radio cell; as a consequence, all the users in the same area will select the same target cell.

Embodiments of the invention enable to relax this constraint, by allowing the user equipments to select the appropriate cell offering them the required quality of service corresponding e.g. to their playback fullness and the delivery time of their video content from the caching nodes.

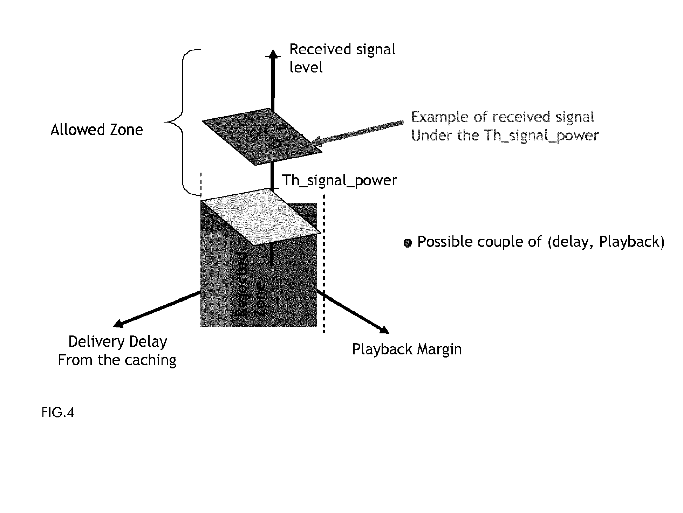

Figure 4 depicts the three liberty degrees for neighboring cell selection in such example. In the allowed zone, for each value of received signal under the threshold (Th_signal_power), many combinations of the couple (delivery delay, playback margin) are possible on the same plan.

Embodiments of the invention enable the user equipment to relax the constraint on the received signal and look for another cell offering the possibility to fill its playback as quickly as possible before freezes happens. The user equipment can exploit the following example score table:

| Delivery Delay / Playback margin | Low | Medium | High |
|---|---|---|---|
| Low | 1 | 0 | 0 |
| Medium | 2 | 1 | 0 |
| High | 3 | 2 | 1 |

- User equipments having a comfortable playback margin (high state) could select three possible cells (score between 1 and 3). It is clear that a high score is given to the cell where the constraint on the delay is not very critical (score =3)
- User equipments having a poor playback margin (low state) should select only the cell offering them the highest possible score.

After computing the score of the different cells (declared eligible by comparing their received signals to the defined Th_signal_power, the indicator function), the user equipment selects the cells having a score different from 0.

In one aspect, there is provided a method for neighboring cell selection for an user equipment using a content delivery service in a mobile network.

Various embodiments are provided, which may be used alone or in combination, according to various combinations.

In an embodiment, said content being located at a mobile network node referred to as caching node, said content being delivered through a path between said caching node and said user equipment via a serving cell, said selection of a neighboring cell is based on selection parameters including a delivery delay parameter representative of a delay that would be perceived by said user if said content were delivered through a path between said caching node and said user equipment via said neighboring cell.

In an embodiment, said delivery delay parameter includes a delivery time representative of a time for content delivery through said path between said caching node and said user equipment via said neighboring cell.

In an embodiment, said delivery delay parameter includes a retrieval time representative of a time for retrieving said content from said caching node.

In an embodiment, said delivery delay parameter includes a buffer level representative of an amount of content buffered at said user equipment.

In an embodiment, said delivery delay parameter includes a QoS delay representative of QoS delay requirement for said content delivery service.

In an embodiment, said selection parameters include a quality of a radio signal received by said user equipment from said neighboring cell.

In an embodiment, said neighboring cell selection includes a selection of a best one of different neighbouring cells, based on said selection parameters.

In an embodiment, said caching node comprises a base station.

In an embodiment, said method comprises a step of:

- an entity such as user equipment and/or mobile network node performing said neighboring cell selection, for Neighboring Cell List establishment.

In an embodiment, said method comprises a step of:

- an entity such as user equipment and/or mobile network node performing said neighboring cell selection, for target cell selection for handover.

In an embodiment, said method comprises a step of:

- an entity such as mobile network node communicating said delivery time to said user equipment.

In an embodiment, said method comprises a step of:

- an entity such as mobile network node communicating said delivery time to user equipments on common channels.

In an embodiment, said method comprises a step of:

- an entity such as ALTO server communicating said delivery time to an entity such as ALTO client in said user equipment.

Other aspects relate to different entities configured for performing such method. Such entities may include, in particular, user equipment, mobile network node (such as base station), mobile network Topology Aware Information Server TAIS (such as ALTO server).

The detailed implementation of such entities does not raise any special problem for a person skilled in the art, and therefore does not need to be more fully disclosed, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

**1.** A method for neighboring cell selection for an user equipment using a content delivery service in a mobile network, said content being located at a mobile network node referred to as caching node, said content being delivered through a path between said caching node and said user equipment via a serving cell, said selection of a neighboring cell being based on selection parameters including a delivery delay parameter representative of a delay that would be perceived by said user if said content were delivered through a path between said caching node and said user equipment via said neighboring cell.

2.  A method according to claim 1, wherein said delivery delay parameter includes a delivery time representative of a time for content delivery through said path between said caching node and said user equipment via said neighboring cell.

3.  A method according to claim 1 or 2, wherein said delivery delay parameter includes a retrieval time representative of a time for retrieving said content from said caching node.

4.  A method according to any of claims 1 to 3, wherein said delivery delay parameter includes a buffer level representative of an amount of content buffered at said user equipment.

5.  A method according to any of claims 1 to 4, wherein said delivery delay parameter includes a QoS delay representative of QoS delay requirement for said content delivery service.

6.  A method according to any of claims 1 to 5, wherein said selection parameters include a quality of a radio signal received by said user equipment from said neighboring cell.

7.  A method according to any of claims 1 to 6, wherein said neighboring cell selection includes a selection of a best one of different neighbouring cells, based on said selection parameters.

8.  A method according to any of claims 1 to 7, wherein said caching node comprises a base station.

9.  A method according to any of claims 1 to 8, comprising a step of:

    - an entity such as user equipment and/or mobile network node performing said neighboring cell selection, for Neighboring Cell List establishment.

10. A method according to any of claims 1 to 9, comprising a step of:

    - an entity such as user equipment and/or mobile network node performing said neighboring cell selection, for target cell selection for handover.

11. A method according to any of claim 2 to 10, comprising a step of:

    - an entity such as mobile network node communicating said delivery time to said user equipment.

12. A method according to any of claim 2 to 11, comprising a step of:

    - an entity such as mobile network node communicating said delivery time to user equipments on common channels.

13. A method according to any of claims 2 to 12, comprising a step of:

    - an entity such as ALTO server communicating said delivery time to an entity such as ALTO client in said user equipment.

14. An entity configured for performing a method according to any of claims 1 to 13.

FIG.1

FIG.2

FIG.3

Received signal level

Allowed Zone

Example of received signal
Under the Th_signal_power

Th_signal_power

Rejected Zone

Possible couple of (delay, Playback)

Delivery Delay
From the caching

Playback Margin

FIG.4

Europäisches
Patentamt
European
Patent Office
Office européen
des brevets

# EUROPEAN SEARCH REPORT

**Application Number**

EP 12 30 6699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/039204 A2 (QUALCOMM INC [US]; GOGIC ALEKSANDAR [US]) 26 March 2009 (2009-03-26) | 1-10,14 | INV.<br>H04W36/26<br>H04L29/08 |
| Y | * abstract *<br>* paragraphs [0022] - [0024], [0032], [0034], [0037], [0040], [0044], [0061], [0062], [0068] *<br>* paragraphs [0070], [0073] - [0076], [0081], [0082], [0086] *<br>* paragraphs [0088], [0089]; claims 1,9 * | 11-13 | ADD.<br>H04W36/00 |
| X | US 7 689 221 B1 (GAZZARD DARYL ROBERT [US]) 30 March 2010 (2010-03-30) | 1-10,14 | |
| A | * abstract *<br>* column 1, lines 16-43 *<br>* column 2, line 1 - column 3, line 32 *<br>* column 5, lines 1-27 *<br>* column 5, line 58 - column 7, line 46; claims 1,6,7 * | 11-13 | |
| X | EP 1 411 739 A1 (LUCENT TECHNOLOGIES INC [US]) 21 April 2004 (2004-04-21) | 1,2, 5-10,14 | |
| A | * abstract *<br>* paragraphs [0005] - [0010], [0013] - [0016], [0021], [0028] - [0030]; claims 1,3 * | 3,4, 11-13 | **TECHNICAL FIELDS SEARCHED (IPC)**<br><br>H04W<br>H04L |
| Y | EP 1 284 583 A2 (FUJITSU LTD [JP]) 19 February 2003 (2003-02-19) | 11,12 | |
| A | * abstract *<br>* paragraphs [0003] - [0005], [0007], [0013] - [0021], [0030], [0039], [0062] *<br>* paragraphs [0064], [0067], [0068], [0077], [0082], [0089] *<br>* paragraphs [0109], [0113], [0114], [0118]; claims 1,2,4-7 * | 1-10,13, 14 | |

-/--

The present search report has been drawn up for all claims

| Place of search | Date of completion of the search | Examiner |
|---|---|---|
| Berlin | 28 June 2013 | Alonso Maleta, J |

EPO FORM 1503 03.82 (P04C01)

Europäisches
Patentamt

European
Patent Office

Office européen
des brevets

# EUROPEAN SEARCH REPORT

Application Number

EP 12 30 6699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALIMI R ET AL: "ALTO Protocol; draft-ietf-alto-protocol-13.txt", ALTO PROTOCOL; DRAFT-IETF-ALTO-PROTOCOL-13.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 September 2012 (2012-09-08), pages 1-76, XP015084269, [retrieved on 2012-09-08] | 13 | |
| A | * abstract * | 1-12,14 | |
| A | US 7 440 430 B1 (JAGADEESAN RAMANATHAN T [US] ET AL) 21 October 2008 (2008-10-21) * abstract * * column 1, lines 23-67 * * column 3, line 17 - column 4, line 45 * * column 5, lines 34-56 * * column 6, lines 42-47 * * column 8, line 16 - column 9, line 23 * | 1-14 | |
| A | US 2008/095114 A1 (DUTTA ASHUTOSH [US] ET AL) 24 April 2008 (2008-04-24) * abstract * * paragraph [0093] * | 1-14 | TECHNICAL FIELDS SEARCHED (IPC) |
| A | US 2004/071088 A1 (CURCIO IGOR D D [FI] ET AL) 15 April 2004 (2004-04-15) * abstract * * paragraphs [0001], [0003] - [0005], [0010] - [0014], [0050] - [0056] * | 1-14 | |

The present search report has been drawn up for all claims

| Place of search | Date of completion of the search | Examiner |
|---|---|---|
| Berlin | 28 June 2013 | Alonso Maleta, J |

EPO FORM 1503 03.82 (P04C01)

**ANNEX TO THE EUROPEAN SEARCH REPORT
ON EUROPEAN PATENT APPLICATION NO.**

EP 12 30 6699

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2013

| Patent document cited in search report | | | Publication date | Patent family member(s) | | | Publication date |
|---|---|---|---|---|---|---|---|
| WO 2009039204 | A2 | | 26-03-2009 | AT | 551804 | T | 15-04-2012 |
| | | | | CA | 2696906 | A1 | 26-03-2009 |
| | | | | CN | 101803311 | A | 11-08-2010 |
| | | | | CN | 102917466 | A | 06-02-2013 |
| | | | | EP | 2191619 | A2 | 02-06-2010 |
| | | | | EP | 2442503 | A1 | 18-04-2012 |
| | | | | ES | 2385124 | T3 | 18-07-2012 |
| | | | | JP | 5108104 | B2 | 26-12-2012 |
| | | | | JP | 2011501886 | A | 13-01-2011 |
| | | | | JP | 2012182807 | A | 20-09-2012 |
| | | | | KR | 20100068450 | A | 23-06-2010 |
| | | | | KR | 20120005571 | A | 16-01-2012 |
| | | | | KR | 20120005572 | A | 16-01-2012 |
| | | | | KR | 20130001341 | A | 03-01-2013 |
| | | | | RU | 2010115366 | A | 27-10-2011 |
| | | | | TW | 200929960 | A | 01-07-2009 |
| | | | | US | 2009080451 | A1 | 26-03-2009 |
| | | | | WO | 2009039204 | A2 | 26-03-2009 |
| US 7689221 | B1 | | 30-03-2010 | US | 7689221 | B1 | 30-03-2010 |
| | | | | US | 2010136977 | A1 | 03-06-2010 |
| | | | | US | 2011261790 | A1 | 27-10-2011 |
| EP 1411739 | A1 | | 21-04-2004 | AT | 332616 | T | 15-07-2006 |
| | | | | DE | 60212971 | T2 | 01-03-2007 |
| | | | | EP | 1411739 | A1 | 21-04-2004 |
| | | | | US | 2004072567 | A1 | 15-04-2004 |
| EP 1284583 | A2 | | 19-02-2003 | AT | 349871 | T | 15-01-2007 |
| | | | | CN | 1407822 | A | 02-04-2003 |
| | | | | DE | 60217027 | T2 | 25-10-2007 |
| | | | | EP | 1284583 | A2 | 19-02-2003 |
| | | | | JP | 4287102 | B2 | 01-07-2009 |
| | | | | JP | 2003134550 | A | 09-05-2003 |
| | | | | KR | 20030015859 | A | 25-02-2003 |
| | | | | US | 2003083069 | A1 | 01-05-2003 |
| US 7440430 | B1 | | 21-10-2008 | NONE | | | |
| US 2008095114 | A1 | | 24-04-2008 | CA | 2667180 | A1 | 29-05-2008 |
| | | | | EP | 2092683 | A2 | 26-08-2009 |
| | | | | US | 2008095114 | A1 | 24-04-2008 |
| | | | | US | 2012096520 | A1 | 19-04-2012 |
| | | | | WO | 2008063333 | A2 | 29-05-2008 |
| US 2004071088 | A1 | | 15-04-2004 | AU | 2003278207 | A1 | 04-05-2004 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 12 30 6699

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2013

| Patent document cited in search report | Publication date | Patent family member(s) | Publication date |
|---|---|---|---|
| | | BR      0315207 A | 16-08-2005 |
| | | CA      2500781 A1 | 29-04-2004 |
| | | CN      1706146 A | 07-12-2005 |
| | | EP      1552644 A1 | 13-07-2005 |
| | | FI      20021820 A | 15-04-2004 |
| | | JP      4287376 B2 | 01-07-2009 |
| | | JP    2006503463 A | 26-01-2006 |
| | | KR   20050065592 A | 29-06-2005 |
| | | MY       143014 A | 14-02-2011 |
| | | TW      I248740 B | 01-02-2006 |
| | | US    2004071088 A1 | 15-04-2004 |
| | | WO    2004036824 A1 | 29-04-2004 |

EPO FORM P0459